Europäisches Patentamt

European Patent Office

Office européen des brevets

(11) Veröffentlichungsnummer: **0 341 494**
**A2**

## (12) EUROPÄISCHE PATENTANMELDUNG

(21) Anmeldenummer: 89107556.6

(51) Int. Cl.⁴ **F16L 47/00**

(22) Anmeldetag: 26.04.89

(30) Priorität: 10.05.88 CH 1767/88

(43) Veröffentlichungstag der Anmeldung:
**15.11.89 Patentblatt 89/46**

(84) Benannte Vertragsstaaten:
**AT BE CH DE FR GB IT LI NL SE**

(71) Anmelder: **VON ROLL AG**

**CH-4563 Gerlafingen(CH)**

(72) Erfinder: **Caduff, Marcel**
**Finkenweg 20**
**CH-4564 Obergerlafingen(CH)**

(74) Vertreter: **EGLI-EUROPEAN PATENT**
**ATTORNEYS**
**Horneggstrasse 4**
**CH-8008 Zürich(CH)**

(54) **Verfahren zur Herstellung einer Abzweigrohrleitung mit einem Sattelstück.**

(57) Ein aus einem Sattelflansch (23) und einem Rohrstutzen (24) bestehendes Sattelstück (22) wird auf die Aussenfläche einer Rohrleitung (1) aufgesetzt. Auf der der Rohrleitung (1) zugekehrten Verbindungsfläche (30) des Sattelflansches (23) ist eine Wicklung (31) aus einem Widerstandsheizdraht angeordnet, in welcher durch Zufuhr elektrischer Energie Wärme erzeugt wird, mit welcher die Verschweissung des Sattelflansches (23) mit der Oberfläche der Rohrleitung (1) erfolgt. Anschliessend wird die Wandung der Rohrleitung (1) durch den Rohrstutzen (24) hindurch durchbohrt und damit die Abzweigung geschaffen. Dadurch, dass die Rohrleitung (1) erst nach erfolgter Schweissung des Sattelstükkes angebohrt wird, kann das Anbringen des Sattelstückes unter Einhaltung der für die Qualität der Schweissung erforderlichen Sauberkeit auch bei bereits im Betrieb stehenden Rohrleitungen erfolgen.

Fig. 6

EP 0 341 494 A2

## Verfahren zur Herstellung einer Abzweigrohrleitung mit einem Sattelstück

Die Erfindung betrifft ein Verfahren zum Befestigen eines aus einem Sattelflansch und einem Abzweigrohranschluss bestehenden Sattelstückes aus einem schweissbaren, thermoplastischen Kunststoff mit der Oberfläche eines Rohrleitungsstückes aus einem thermoplastischen, schweissbaren Kunststoff zur Schaffung einer Abzweigrohrleitung, bei welchem das Sattelstück auf seiner auf der Rohroberfläche aufliegenden Verbindungsfläche mit einer Wicklung aus einem Widerstandsdraht belegt wird, mit welcher durch Zufuhr elektrischer Energie Wärme an der Verbindungsfläche des Sattelstückes und an der entsprechenden Partie der Oberfläche des Rohrleitungsstückes zum Verschweissen dieser beiden Flächen erzeugt wird, eine Sattelfläche zur Durchführung des Verfahrens und ein Verfahren zur Herstellung des Sattelstückes.

Zur Herstellung von Abzweigrohrleitungen an bestehenden oder neu verlegten Rohrleitungen ist es bekannt, diese mittels als Sattelstücke ausgebildeten Formstücken an die Rohrleitung anzuschliessen. Die Sattelstücke sind je nach Art der Rohrleitung aus PVC (Polyvinylchlorid), Steinzeug oder Eternit hergestellt und werden auf die Aussenfläche der Rohrleitung aufgesetzt und verklebt, nachdem in der Rohrleitung eine Abzweigöffnung angebracht wurde. Bei bestehenden Rohrleitungen muss zuerst noch die Rohrleitung aus der Umhüllung herausgebrochen und zudem entleert werden.

Besteht die Rohrleitung aus einem nicht klebbaren thermoplastischen Kunststoff, z.B. aus einem Polyolefin, ist es bekannt, entweder separat hergestellte Formstücke mit einem Abzweigstutzen einzusetzen oder an einer Stelle der Rohrleitung eine Oeffnung mit einer daran angeformten Aushalsung herzustellen und an dieser Aushalsung einen Rohrstutzen anzuschweissen. Bei Verwendung eines Formstückes muss an der Rohrleitung ein Rohrstück entsprechend der Länge des Formstückes herausgeschnitten, dann das Formstück eingesetzt und mittels elektrischer Schweissmuffen mit der Rohrleitung verbunden werden. Muss das Formstück bei einer bereits bestehenden Rohrleitung eingefügt werden, muss zuerst noch die Rohrleitung ausser Betrieb gesetzt und gegen weiteren Zufluss abgedichtet werden, worauf sie an der Anschlussstelle der vorgesehenen Abzweigrohrleitung vollständig ausgegraben werden musss. Die Güte der Schweissungen hängt stark von der erreichbaren Sauberkeit an der Anschlussstelle sowie von der Erfahrung der die Schweissung vornehmenden Person ab. Der Aufwand ist aber hierbei, abgesehen von dem Risiko einer Undichtheit und einer damit verbundenen Grundwasserverschmutzung beträchtlich.

Beim Aushalsen der Anschlussstelle wird die Wand der Rohrleitung durchbohrt. Darauf wird an der Oeffnung die Rohrwand erwärmt, mit den Aushalswerkzeugen ausgezogen und dann abgekühlt. Anschliessend wird gewöhnlich an die Aushalsung ein Rohrstutzen angeschweisst.

Bei bestehenden Rohrleitungen muss vor dem Aushalsen die Rohrleitung abgedichtet und möglichst grosse Sauberkeit angestrebt werden. Wenn auch der Aufwand - weniger Ausgrabarbeit und kleinere Baugrube - nicht ganz denjenigen beim Einsetzen eines Formstückes erreicht, ist dieser jedoch immer noch beträchtlich, insbesondere im Hinblick auf die geforderte Sauberkeit, auf die Kosten der Aushalswerkzeuge und auf den Einsatz qualifizierter und erfahrener Verarbeitungspersonen.

Bei den separat, beispielsweise in der Werkstatt, hergestellten Formstücken kann die Abzweigöffnung durch Aushalsen eines Rohrstückes mit Aushalswerkzeugen, mit einer Druckluftblase oder mit einem Gummibalg verformt und durch Ansetzen eines Abzweigstutzens mittels Schweissung ergänzt werden. Das Aushalsen einer Abzweigöffnung ist vor allem dann anwendbar, wenn die Abzweigrohrleitung einen kleineren Durchmesser aufweist als die Rohrleitung.

Ist der Durchmesser der Abzweigrohrleitung gleich demjenigen der Rohrleitung, tritt anstelle des Aushalsens die Herstellung und Verwendung eines Formstückes durch Zusammenschweissen von drei schräg angeschnittenen Rohrstücken. Bei dieser Herstellart ist der Aufwand kleiner, da die Kosten für die Aushalswerkzeuge entfallen. Dafür sind die Schweissnähte länger und das Risiko einer Undichtheit grösser. Insbesondere ist die Gefahr des Versatzes der Wände und der Entstehung von Ovalitäten gross.

Die Erfindung betrifft das Gebiet der Fortleitung von Flüssigkeiten und Gasen im drucklosen und im Druckbereich, insbesondere im Breich von Abzweigrohrleitungen sowohl bei neu erstellten Rohrleitungen als auch bei bestehenden Rohrleitungen, bei welchen zum Beispiel als Folge der Neuerstellung von Häusern und Gebäuden zusätzliche Abzweigrohrleitungen an der bestehenden Rohrleitung erforderlich werden. In einem solchen Fall ist es bekannt, elektrisch schweissbare Sattelstücke an der Abzweigstelle zu verwenden. Solche, als Anbohrschellen bezeichnete Sattelstücke sind in verschiedenen Ausführungen bekannt und können bei Drücken bis zu 10 bar eingesetzt werden. Stellvertretend für viele bekannte Ausführungsformen seien EP 88 703, CH 528 697 und GB 1 408 944 genannt. Allen diesen Ausführungen ist aber gemeinsam, dass zum elektrischen Schweissen die Anbohrschellen mechanische, d. h. mit Spannmitteln, z.B. mit Schrauben oder Spannbügeln, fest auf die Rohroberfläche gedrückt werden müssen. Praktisch alle Rohrschellen sind deshalb rohrumfassend ausgebildet.

Der Erfindung liegt die Aufgabe zugrunde, das Verfahren der eingangs beschriebenen Art so weiter auszugestalten, dass ein Sattelstück für eine Abzweigrohrleitung mit minimaler Ausgrabarbeit und bei grösster Sauberkeit mit der Oberfläche der Rohrleitung zuverlässig verbunden werden kann.

Diese Aufgabe wird gemäss der Erfindung dadurch gelöst, dass das Sattelstück auf der Oberfläche des Rohrleitungsstückes aufgelegt und der Spalt zwischen der Verbindungsfläche des Sattelstückes und der Oberfläche der Rohrleitung abgedichtet wird, dann im Spalt und im Stutzen des Sattelstückes ein Vakuum erzeugt wird und anschliessend durch Zufuhr elektrischer Energie in die Wicklung das Sattelstück mit dem Rohrleitungsstück zusammengeschweisst wird, worauf die Wand des Rohrleitungsstückes durch den Rohrstutzen hindurch ausgebohrt wird.

Dadurch wird erreicht, dass die zum Anpressen des Sattelstückes auf die Oberfläche des Rohrleitungsstückes erforderliche Kraft aufgebracht werden kann, ohne dass eine rohrumfassende Ausführung wie bei einer Rohrschelle erforderlich ist. Dies ist insbesondere bei grossen Durchmessern im Hinblick auf die dadurch erzielbare Materialeinsparung von erheblicher Bedeutung. Hierbei ist es zweckmässig, dass zur Erreichung des Vakuums der Spalt zwischen der Verbindungsfläche des Sattelstückes und der Oberfläche des Rohrleitungsstückes ausserhalb der Wicklung abgedichtet wird.

Die Erfindung umfasst weiter ein Sattelstück, dessen Aufgabe es ist, die Durchführung des erfindungsgemässen Verfahrens in optimaler Weise zu ermöglichen. Diese Aufgabe wird gemäss der Erfindung dadurch gelöst, dass ein gewölbter, eine Teilfläche der Rohroberfläche abdeckender Sattelflansch eine Abzweigöffnung aufweist, die von einem schief zur Normalen der Fläche des Sattelflansches geneigten Rohrstutzen umgeben ist, welcher am Umfang der Abzweigöffnung in den Sattelflansch übergeht, an dessen der Rohroberfläche zugekehrten Verbindungsfläche Windungen einer Wicklung aus einem Widerstandsheizdraht angeordnet ist, wobei ausserhalb der Wicklung eine Ringnut eingearbeitet ist, in welche eine Weichdichtung eingelegt ist.

Die Erfindung umfasst auch ein Verfahren zur Herstellung des Sattelstückes, bei welchem das einem Sattelflansch und einem Rohrstutzen bestehende Sattelstück aus einem einzigen Teil hergestellt oder aus zwei Teilen zusammengeschweisst wird, wobei auf der Verbindungsfläche des Sattelflansches eine die Abzweigöffnung umgebende Wicklung aus einem Widerstandsheizdraht angeordnet wird, die in einem separaten Arbeitsgang hergestellt wird, bei welchem ein mit einem thermoplastischen Kunststoff beschichteter Widerstandsheizdraht in einer Spirale um eine, etwa der Grösse der Abzweigöffnung entsprechende, auf einer ebenen oder gewölbten Grundplatte angeordnete und von einer ebenen oder gewölbten Deckplatte bedeckt und auf eine Wickelplatte gelegt wird, worauf die Wicklung durch Zufuhr elektrischer Energie soweit erwärmt wird, dass die Windungen eine ebene oder gewölbte Wicklungsscheibe bilden.

Die Erfindung ist in der Zeichnung in Ausführungsbeispielen dargestellt und nachfolgend beschrieben. Es zeigen:

Fig. 1 einen Schnitt eines Rohrleitungsstückes mit einer ausgehalsten Abzweigöffnung, wobei ein Rohrstutzen an die Aushalsung spiegelgeschweisst ist

Fig. 2 einen Schnitt eines Rohrleitungsstückes mit einer ausgehalsten Abzweigöffnung, wobei an der Aushalsung ein Rohrstutzen durch Heizelement-Muffenschweissung angeschweisst ist,

Fig. 3 einen schematisch dargestellten Schnitt eines Formstückes mit einer ausgehalsten Abzweigöffnung, an der ein Rohrstutzen spiegelgeschweisst ist

Fig. 4 einen schematisch dargestellten Schnitt eines Formstückes mit einer Abzweigung, das aus drei schräg zugeschnittenen Rohrteilen zusammengesetzt und verschweisst ist,

Fig. 5 eine schematisch dargestellte Seitenansicht einer rohrumfassenden Anbohrschelle, die mittels Schrauben auf den Aussenumfang der Rohrleitung geklemmt ist,

Fig. 6 einen Längsschnitt eines Sattelstückes, das elektrisch auf eine Rohrleitung geschweisst ist,

Fig. 7 einen Längsschnitt eines weiteren Sattelstückes mit einem -in der Draufsicht gesehen - rechteckigen Sattelflansch und

Fig. 8 einen schematisch dargestellten Längsschnitt des Sattelstückes nach Fig. 7 mit daran angebauter Vakuumeinrichtung.

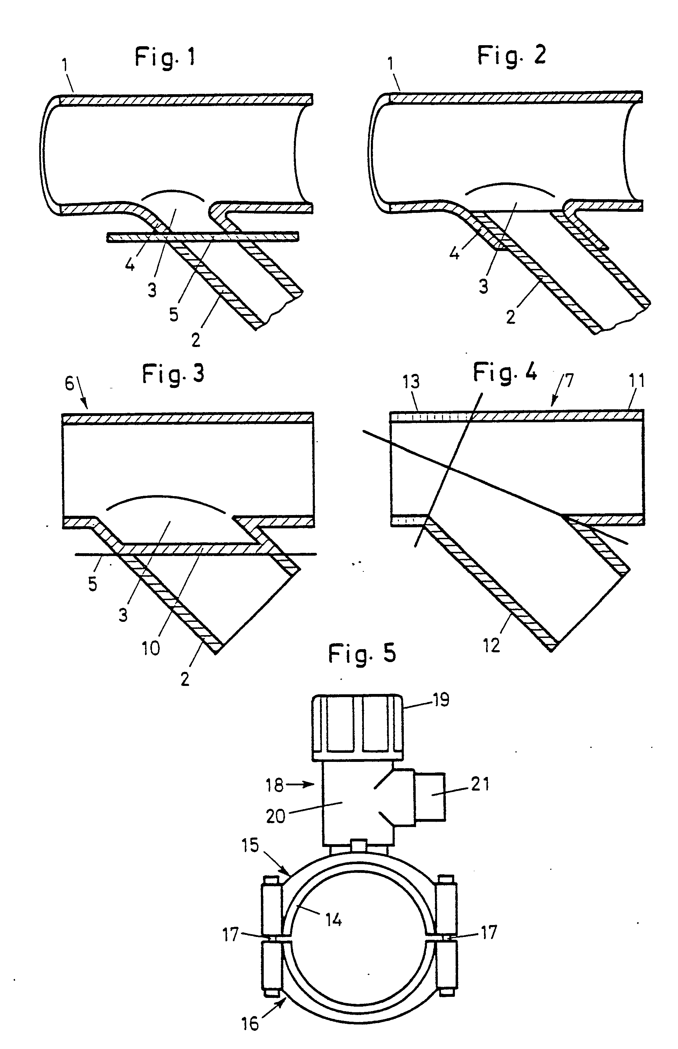

In Fig. 1 - 5 ist der in der Beschreibungseinleitung beschriebene Stand der Technik anhand von Ausführungen dargestellt, wie er bei Rohrleitungen aus nicht klebbarem thermoplastischem Kunststoff Anwendung findet. In Fig. 1 und 2 ist eine Rohrleitung 1 im Schnitt dargestellt, an welcher ein Rohrstutzen 2 an einer Abzweigöffnung 3 angeschweisst ist.

Hierzu wird die Abzweigöffnung 3 augehalst, wobei ein von der Aussenfläche der Rohrleitung 1 abstehender Rand 4 entsteht. In Fig. 1 ist dargestellt, wie auf diesen Rand 4 der Rohrstutzen 2 spiegelgeschweisst wird, was in Fig. 1 durch die hierbei zu verwendende beheizte Platte 4 schematisch dargestellt ist. Hierbei werden die Rohrleitung 1 und der Rohrstutzen 2 an den zu verbindenden Stellen erwärmt und hierauf durch Zusammenpressen stumpfgeschweisst. Bei der Schweissung nach Fig. 2 wird der Rohrstutzen 2 mittels Heizelement-Muffenschweisswerkzeugen in die ausgehalste Abzweigöffnung 3 eingesetzt und durch das um die Aushalsung gelegte Heizelement flächenstumpfgeschweisst.

In Fig. 3 und 4 ist die Verwendung von Formstücken 6, 7 dargestellt. In Fig. 3 ist eine Abzweigöffnung 3 einer Rohrleitung 1 mit einer Aushalsung 10 versehen, welche zusammen mit dem in Gehrung geschnittenen Rand des Rohrstutzens 2 durch Spiegelschweissung stumpfgeschweisst wird. Diese Art der Herstellung von Formstücken eignet sich vor allem bei Abzweigöffnungen 3, deren Durchmesser kleiner ist als der Durchmesser der Rohrleitung 1.

Das Formstück 7 nach Fig. 4 wird aus drei schräggeschnittenen Rohrteilen 11, 12, 13 zusammengeschweisst. Die hierbei entstehenden Schweissnähte bedingen wegen ihrer grossen Gesamtlänge eine äusserst sorgfältige Herstellung.

In Fig. 5 ist eine Anbohrschelle dargestellt, die sich aus zwei Sattelteilen 15, 16 zusammensetzt, die durch Schrauben 17 fest auf die Aussenfläche einer Rohrleitung 14 gespannt werden. Auf den innenseitigen Verbindungsflächen der Sattelteile 15, 16 sind Windungen aus einem Widerstandsheizdraht verlegt, in denen durch Zuführung elektrischer Energie Wärme erzeugt wird, wodurch die Sattelteile 15, 16 mit der Rohrleitung 14 verschweisst werden.

Auf der Aussenseite des Sattelteils 15 ist ein Oberteil 18 angesetzt, der im wesentlichen als durch eine Haube 19 abgeschlossener Rohrteil 20 ausgebildet ist, an dem seitlich ein Abzweigstutzen 21 angeordnet ist.

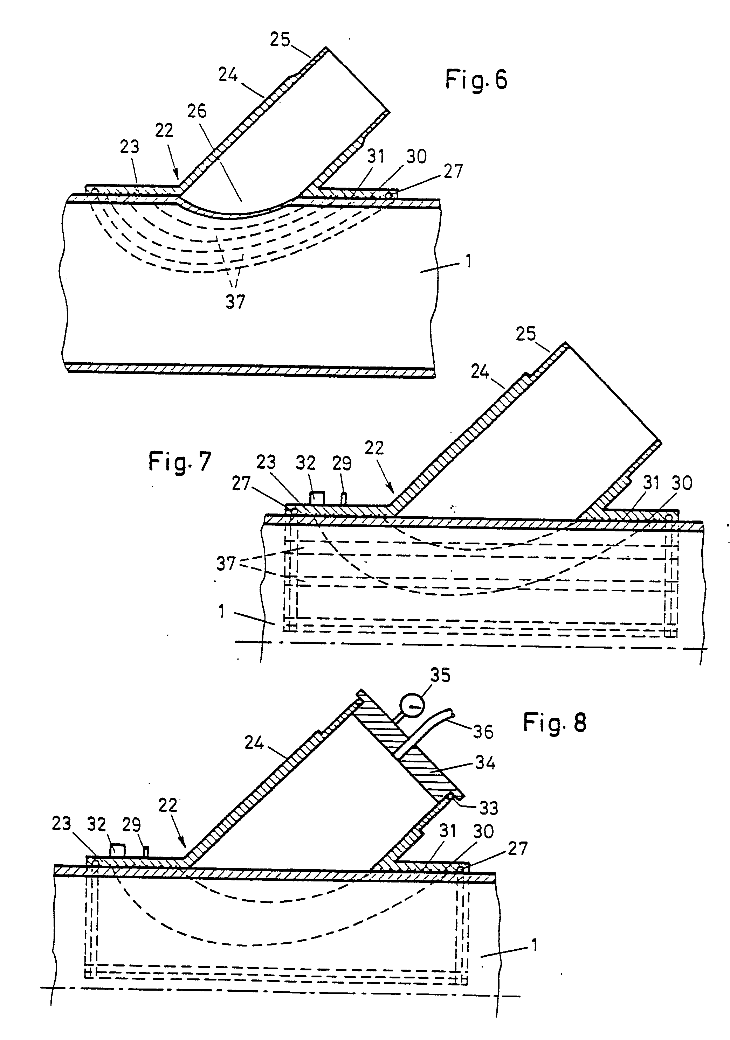

In Fig. 6 ist eine erfindungsgemässe Rohrleitung 1 dargestellt, auf deren Aussenseite ein Sattelstück 22 angeschweisst ist. Das Sattelstück 22 setzt sich aus einem Sattelflansch 23 und einem Rohrstutzen 24 zusammen. Am freien Ende des Rohrstutzens 24 ist ein im Aussendurchmesser abgesetzter Rohrteil 25 erkennbar, welcher der Verbindung mit der anschliessenden Abzweigleitung dient und Sitz einer Elektroschweissmuffe sein kann, mit welcher die Abzweigleitung mit dem Rohrstutzen 24 verbunden wird.

Aus Fig. 6 ist erkennbar, dass der Sattelflansch 23 sich um die Abzweigöffnung 26 mit annähernd konstanter Breite erstreckt, so dass der Flansch - von oben gesehen - eine ovale Form aufweist.

Der Sattelflansch 23 weist auf seiner gegen die Rohrleitung gerichteten Verbindungsfläche 30 eine Wicklungg 31 aus einem Widerstandsheizdraht auf, welche für das Verschweissen des Sattelstückes 2 auf die Rohrleitung 1 dient. Ausserhalb der Wicklung 31 ist in der Verbindungsfläche 30 eine Ringnut 27 eingearbeitet, in welche ein Weichdichtungsring, z.B. mit kreisförmigem oder kreisrohrförmigem Querschnitt, eingelegt ist, durch welche die Verbindungsfläche 30 nach aussen abgedichtet wird.

In Fig. 7 ist ein weiteres Sattelstück, ähnlich demjenigen in Fig. 6, dargestellt, bei welcher die Rohrleitung 1 noch keine Abzweigöffnung aufweist. Dies ist der Zustand, wenn das Sattelstück 22 auf die Rohrleitung 1 geschweisst wird. Im Gegensatz zur ovalen Form des Sattelflansches 23 in Fig. 6 ist diejenige in Fig. 7 - von oben gesehen - rechteckig. Da die Ringnut 27 sich längs des freien Randes des Sattelflansches 23 ersteckt, verläuft sie ebenfalls rechteckförmig. Im Sattelflansch 23 ist noch eine Anschlussstelle 32 zur Zuführung elektrischer Energie aus einer Stromquelle und ein Schweissindikator 29 dargestellt, der der Ueberwachung einer einwandfreien Schweissung dient. Es können auch mehrere Schweissindikatoren 29 angeordnet sein.

In Fig. 8 ist das Sattelstück 22 nach Fig. 7 in einem Zeitpunkt dargestellt, in welchem das Anschweissen des Sattelstückes 22 auf die Rohrleitung 1 ausgeführt ist. Zu diesem Zweck wird der Rohrstutzen 24 durch einen mit einer Dichtung 33 versehenen Deckel 34 dicht abgeschlossen. Im Deckel 34 ist ein Druckanzeigegerät 35 angeordnet, mit welchem der Druck im Innern des Rohrstutzens 24 und im Spalt unter dem Sattelflanch 23 gemessen wird. Eine ebenfalls mit dem Innenraum in Verbindung stehende Leitung 36 ist mit einer nicht dargestellten Vakuumpumpe verbunden, mit welcher im Innenraum ein Vakuum erzeugt wird. Dadurch wird das Sattelstück 22, dessen Innenraum durch den Deckel 34 und die in die Ringnut 27 eingelegte Weichdichtung gegen die Aussenatmosphäre abgedichtet ist, durch den Atmosphärendruck auf die Rohrleitung 1 gedrückt. Die auf das Sattelstück 23 ausgeübte Kraft ist hierbei umso grösser, je kleiner das Vakuum im Innenraum ist. Die Weichdichtung hat nur die Erzeugung des Vakuums im Innern des Sattelstückes zu ermöglichen. Im Betrieb wird die Dichtung der Rohrleitung ausschliesslich durch die Schweissung im Sattelflansch 23 gewährleistet.

Anstelle des ausserhalb der Wicklung 31 in der Verbindungsfläche 30 angeordneten Ringnut mit einem Weichdichtungsring als Abdichtungsmittel für das Sattelstück können auch Klebbänder oder Folien verwendet werden. Die Klebbänder dichten am Umfang des Sattelflansches 23 und der Oberfläche der Rohrleitung 1. Diese Dichtungsart kommt dann in Frage, wenn beispielsweise auf der Oberfläche der Rohrleitung Vertiefungen, Rillen o.dgl. vorhanden sind, die beispielsweise beim Entfernen der Einbettung entstehen können. Mit den Klebbändern können dann solche Vertiefungen und Ausnehmungen überdeckt werden, so dass eine gute Abdichtung bei der Erzeugung des Vakuums zwischen Sattelstück und Rohrleitung erreicht wird.

Wenn durch die Erzeugung des Vakuums zwischen dem Sattelstück 22 und der Rohrleitung 1 eine Verschiebung stattfindet, kann diese gegebenenfalls durch die Klebbänder behindert werden, weshalb dann anstelle der Klebbänder eine Folie verwendet werden kann, die mindestens teilweise den Sattelflansch 23 abdeckt und sich bis über die Rohrleitung erstreckt. Die Verbindung mit dem Sattelstück bzw. der Rohrleitung erfolgt dann durch Verkleben mit Klebbändern oder durch Verschweissung. Die Folie kann eine Oeffnung für den Austritt des Rohrstutzens 24 aufweisen, d.h. die Folie deckt dann den Sattelflansch 23 vollständig ab. Es ist aber auch möglich, die Folie so auszubilden, dass der Rohrstutzen 24 mindestens teilweise abgedeckt wird. Durch die Folie wird eine Verformung des Sattelstückes 22 beim Erzeugen des Vakuums in keiner Weise behindert. Die Durchleitung des Anschlusses der Wicklung 31 durch die Folie muss selbstverständlich ebenfalls abgedichtet sein.

Von besonderem Vorteil ist es, dass es zum Anschweissen des Sattelstückes 22 auf die Rohrleitung 1 nicht erforderlich ist, die Abzweigöffnung bereits in diesem Zeitpunkt anzubringen. Es muss lediglich die Einbettung des Rohres soweit entfernt werden, dass die Anschlussstelle zugänglich ist. Es kann aber mit grösster Sauberkeit gearbeitet werden, da keine Flüssigkeit aus dem Innern der Rohrleitung 1 anfällt. Erst wenn die Schweissung beendet und kontrolliert ist, wird durch den Rohrstutzen 24 die Abzweigöffnung 26 gebohrt. Hierzu und für das Anschliessen der Abzweigleitung ist es nicht erforderlich, die Rohrleitung 1 zu entleeren und abzudichten, bis die Abzweigleitung erstellt ist.

Mit dem beschriebenen Sattelstück ist es möglich, auf alle andern Arten der Herstellung von Rohrabzweigungen, sei es mit Formstücken oder mit Aushalsen, und damit auf deren Nachteile (Ovalitäten, Querschnittsverminderungen) zu verzichten. Das Anschweissen eines Sattelstückes 22 ist verhältnismässig einfach. Nachdem die Oberfläche der Rohrleitung von der Oxydschicht gereinigt ist, wird das Sattelstück an die Rohrleitung gelegt und Vakuum erzeugt. Darauf wird die Schweissung ausgeführt und das Vakuum solange aufrecherhalten, bis die Schweissstelle abgekült ist. Da in der Rohrleitung Atmosphärendruck herrrscht, wird die Rohrwandung nach aussen gedrückt, so dass keine Querschnittsverminderungen in der Rohrleitung auftreten können.

Mit dem Sattelstück können auch die Rundheitsabweichungen der Rohre, die bis 5% des Rohrdurchmessers zulässig sind, kompensiert werden. Hierzu können auf der Aussenseite des Sattelflansches 23 Rillen oder Nuten 37 eingearbeitet werden. Durch die dadurch entstehenden Partien mit geringerer Wandstärke wird die Biegsamkeit des Sattelflansches 33 erhöht, so dass er sich unter der Wirkung des Vakuums leichter an etwaige Ovalitäten der Rohrleitung 1 anpassen kann. In Fig. 7 sind die Rillen 37 angedeutet. Sie können sich, wie in Fig. 7 gezeigt, in Längsrichtung der Rohrleitung 1 erstrecken, doch können sie sich auch wie für einen Sattelflansch nach Fig. 6 ringförmig um die Abzweigöffnung 26 erstrecken.

**Ansprüche**

1. Verfahren zum Befestigen eines aus einem Sattelflansch (23) und einem Abzweigrohranschluss (24, 26) bestehenden Sattelstücks (22) aus einem thermoplastischen, schweissbaren Kunststoff an der Oberfläche eines Rohrleitungsstückes (1) aus einem thermoplastischen, schweissbaren Kunststoff zur Schaffung einer Abzweigrohrleitung, bei welchem das Sattelstück auf seiner der Rohroberfläche aufliegenden Verbindungsfläche (30) mit einer Wicklung (31) aus einem Widerstandsheizdraht belegt wird, mit welcher durch Zufuhr elektrischer Energie Wärme an der Verbindungsfläche und an der entsprechenden Partie der Oberfläche des Rohrleitungsstückes zum Verschweissen dieser beiden Flächen erzeugt wird, dadurch gekennzeichnet, dass das Sattelstück (22) auf die Oberfläche des Rohrleitungsstückes (1) aufgelegt und der Spalt zwischen der Verbindungsfläche (30) des Sattelstückes und der Oberfläche des Rohrleitungsstückes abgedichtet wird, dann im Spalt und im Rohrstutzen des Sattelstückes ein Vakuum erzeugt wird und anschliessend durch Zufuhr elektrischer Energie in die Wicklung (31) das Sattelstück mit dem Rohrleitungsstück zusammengeschweisst wird, worauf zur Bildung einer Abzweigöffnung (26) die Wand des Rohrleitungstückes durch den Rohrstutzen hindurch ausgebohrt wird.

2. Verfahren nach Anspruch 1, dadurch gekennzeichnet, dass der Spalt zwischen der Verbindungsfläche (30) des Sattelstückes (22) und der Oberfläche des Rohrleitungsstückes (1) ausserhalb der Wicklung (31) abgedichtet wird.

3. Sattelstück für eine Abzweigrohrleitung zur Durchführung des Verfahrens nach Anspruch 1 oder 2, dadurch gekennzeichnet, dass der gewölbte, eine Teilfläche der Rohroberfläche abdeckende Sattelflansch (23) eine Abzweigöffnung (26) aufweist, die von einem schief zur Normalen der Fläche des Sattelflansches geneigten Rohrstutzen (24) umgeben ist, welcher am Umfang der Abzweigöffnung in den Sattelflansch (23) übergeht, an dessen der Rohroberfläche zugekehrten Verbindungsfläche (30) Windungen einer Wicklung (31) aus einem Widerstandsheizdraht angeordnet sind, wobei Abdichtungsmittel (27) vorgesehen sind, mit denen die Abdichtung zwischen der Rohrleitung und dem Sattelstück (22) erfolgt.

4. Sattelstück nach Anspruch 3, dadurch gekennzeichnet, dass die Dichtungsmittel als eine ausserhalb der Wicklung (31) im Sattelflansch (23) angeordnete Ringnut (27) und eine darin eingelegte Weichdichtung, z.B. eine O-Ringdichtung, ausgebildet ist.

5. Sattelstück nach Anspruch 4, dadurch gekennzeichnet, dass die auf der Verbindungsfläche (30) des Sattelflansches (23) angeordnete Ringnut (27) längs des freien Randes des Sattelflansches (23) verläuft.

6. Sattelstück nach Anspruch 3, dadurch gekennzeichnet, dass die Dichtungsmittel Klebbänder sind, welche die Dichtung zwischen dem Umfang des Sattelflansches (23) und dem Rohrstück (1) bilden.

7. Sattelstück nach Anspruch 3, dadurch gekennzeichnet, dass als Abdichtungsmittel eine Folie angeordnet ist, welche einerseits den Sattelflansch mindestens teilweise abdeckt und andererseits sich in den Bereich der Rohrleitung (1) erstreckt, wobei die Ränder der Folie mit dem Sattelstück (22) verbunden, beispielsweise verklebt oder verschweisst sind.

8. Sattelstück nach Anspruch 7, dadurch gekennzeichnet, dass die Folie eine Oeffnung für den Austritt des Rohrstutzens (24) aufweist oder mindestens teilweise am Rohrstutzen hochgezogen ist, wobei die Stromzuführung für die Wicklung (31) zur Verbindungsfläche (30) abgedichtet ist.

9. Sattelstück nach Anspruch 3, dadurch gekennzeichnet, dass der Sattelflansch (23) eine der Wölbung der Rohroberfläche angepasste Wölbung und - von oben gesehen - Rechteckform aufweist.

10. Sattelstück nach Anspruch 3, dadurch gekennzeichnet, dass der Sattelflansch (23) eine abgerundete Form aufweist, derart, dass die Breite des Sattelflansches (23) um die Abzweigöffnung (26) annähernd konstant ist.

11. Sattelstück nach Anspruch 3, dadurch gekennzeichnet, dass auf der Aussenfläche des Sattelflansches (23) zur Erhöhung der Flexibilität des Sattelflansches Rillen (37) vorgesehen sind, die in Längsrichtung des Sattelflansches bzw. in Richtung der Rohrleitung (1) oder ringförmig um den Rohrstutzen (24) verlaufen.

12. Verfahren zur Herstellung eines Sattelstükkes nach einem der Patentansprüche 3 bis 7, dadurch gekennzeichnet, dass das aus einem Sattelflansch und einem Rohrstutzen bestehende Sattelstück als ein einziges Teil hergestellt oder aus zwei Teilen zusammengeschweisst wird, wobei auf der Verbindungsfläche des Sattelflansches eine die Abzweigöffnung umgebende Wicklung aus einem Widerstandsheizdraht angeordnet wird, die in einem separaten Arbeitsgang hergestellt wird, wobei ein mit einem thermoplastischen Kunststoff beschichteter Widerstandsheizdraht in einer Spirale um eine, etwa der Grösse der Abzweigöffnung entsprechende, auf einer ebenen oder gewölbten Grundplatte angeordnete und von einer ebenen oder gewölbten Deckplatte bedeckte Wickelplatte gelegt wird, worauf die Wicklung durch Zufuhr elektronischer Energie soweit erwärmt wird, dass die Windungen eine ebene oder gewölbte Wicklungsscheibe bilden.

13. Verfahren nach Anspruch 12, dadurch gekennzeichnet, dass die Wicklungsscheibe mit einem gewölbten Sattelflanch verbunden wird.

EP 0 341 494 A2

Fig. 1

Fig. 2

Fig. 3

Fig. 4

Fig. 5

Fig. 6

Fig. 7

Fig. 8